**Europäisches Patentamt**

**European Patent Office**

**Office européen des brevets**

(19)

(11) Veröffentlichungsnummer : **0 136 427**
**B1**

(12) **EUROPÄISCHE PATENTSCHRIFT**

(45) Veröffentlichungstag der Patentschrift :
13.04.88

(51) Int. Cl.⁴ : **B 23 D 31/00**

(21) Anmeldenummer : **84108306.6**

(22) Anmeldetag : **14.07.84**

(54) **Schereinrichtung für stangenförmiges Material.**

(30) Priorität : **05.08.83 DE 3328304**

(43) Veröffentlichungstag der Anmeldung :
**10.04.85 Patentblatt 85/15**

(45) Bekanntmachung des Hinweises auf die Patenterteilung : **13.04.88 Patentblatt 88/15**

(84) Benannte Vertragsstaaten :
**DE FR GB IT**

(56) Entgegenhaltungen :
**CH-A- 431 376
DE-A- 2 259 207
DE-A- 2 262 949
DE-A- 2 531 454
DE-A- 2 553 488
DE-B- 1 947 287
DE-B- 2 631 989**

(73) Patentinhaber : **BROWN, BOVERI & CIE Aktiengesellschaft
Kallstadter Strasse 1
D-6800 Mannheim 31 (DE)**

(72) Erfinder : **Jürgens, Heinz, Dipl.-Ing.
Peukinger Weg 8a
D-4750 Unna (DE)**

(74) Vertreter : **Kempe, Wolfgang, Dr. et al
c/o BROWN, BOVERI & CIE AG ZPT Postfach 351
D-6800 Mannheim 31 (DE)**

## Beschreibung

Die Erfindung betrifft eine Einrichtung zum Scheren von erwärmten Stangen aus Metall, wobei die Stangen durch eine erste Transportvorrichtung als Stangensäule aneinanderliegend mit konstantem Vorschub durch eine Erwärmungseinrichtung transportiert und im letzten Abschnitt der Erwärmungseinrichtung vor der Schereinrichtung durch eine zweite Transportvorrichtung mit erhöhtem Vorschub über die Scherkante hinweg gegen einen Anschlag gefahren werden, und wobei ein vor der Scherkante angeordneter Sensor das Auftreten einer Lücke zwischen zwei aufeinanderfolgenden Stangen wahrnimmt und derart auf die Transportbahn der Stangen ausgerichtet ist, daß sein Abtastbereich im Abstand der zweifachen Abschnittlänge zuzüglich einer minimalen zum Abscheren der Stangen erforderlichen Restlänge vor dem Anschlag liegt und daß dem Sensor eine Steuereinrichtung nachgeschaltet ist, die in Abhängigkeit vom Vorhandensein oder Fehlen eines Stangenabschnittes im Abtastbereich des Sensors Steuersignale für die Weiterverarbeitung der Reststange abgibt und eine Rückstoßvorrichtung zum Zurückstoßen von Reststangen nach dem Abscheren in die Erwärmungseinrichtung. Derartige Schereinrichtungen dienen insbesondere dem Zuschneiden von warmem stangenförmigem Material für die Weiterverarbeitung in einer Schmiedeeinrichtung. Um Störungen des Produktionsablaufes zu vermeiden, ist es erforderlich, daß die abgescherten Stangenabschnitte stets eine genaue Solllänge einhalten, die durch die Lage des Anschlages vorgegeben werden kann.

Sofern ein unbrauchbares Restende des stangenförmigen Materials in den Bereich der Schereinrichtung befördert wird, muß dieses aus dem Produktionsablauf ausgesondert werden. Ein solches Restende ist dann gegeben, wenn es nicht mehr sicher scherbar ist, d. h., wenn seine Länge kleiner ist als die Länge eines Stangenabschnittes zuzüglich einer für den Schervorgang erforderlichen Einspannlänge.

Zur Erfassung und Aussonderung von nicht mehr scherbaren Stangenresten wurde durch die DE-B 2631989 vorgeschlagen, in Transportrichtung der Stangen hinter der Schereinrichtung eine Greifvorrichtung für das Stangenmaterial anzuordnen, die vor dem Abscheren eine Zug- oder Druckkraft auf das Stangenmaterial ausübt. Liegt ein unbrauchbares Restende vor, so transportiert die Greifvorrichtung dieses aus der Scherposition und gibt ein Signal zur Aussonderung des Restendes ab. Ist der Stangenrest jedoch nochmals scherbar, so wird er von einem Niederhalter in der Scherposition festgehalten.

Diese Schereinrichtung mit Greifvorrichtung ist jedoch nicht für das Scheren von langen Stangenabschnitten geeignet. Beim Scheren langer Stangenabschnitte ist die Taktzeit wegen des erforderlichen Zeitaufwandes beim Schmieden so lang, daß ein Rücktransport der Stangenreste nach dem Ablängen eines Stangenabschnittes in die Erwärmungsanlage erforderlich ist, um ein zu starkes Abkühlen des Stangenrestes zu vermeiden. Ein derartiger Rücktransport ist jedoch bei der Einrichtung gemäß der DE-B 2631989 nicht vorgesehen.

Eine Anlage für das Scheren langer Stangenabschnitte, von der vorliegende Erfindung ausgeht, ist in dem Aufsatz « Induktionserwärmungs- und Warmschneideanlage für Schmiederohlinge » in der ASEA-Zeitschrift 1982, Jahrg. 27, Seiten 15 bis 20 beschrieben. Diese Anlage sieht einen Rücktransport der Stangenreste vor. Die Resterkennung erfolgt durch ein Positioniersystem mit Längenmessung an den Stangen im Bereich vor der Erwärmung. Diese Lösung ist jedoch sehr aufwendig und erfordert im Bereich des Stangenmagazins zusätzliche Aufwendungen. Ferner ist eine Verfolgung der Stangenposition in der Anlage mit Hilfe von Speichern notwendig, was einen hohen Steuerungsaufwand zur Folge hat.

Aufgabe der Erfindung ist es, eine Schereinrichtung der eingangs genannten Art derart auszubilden, daß beim Ablängen eines Stangenabschnittes erkannt wird, ob der Stangenrest eine ausreichende Länge aufweist, um nochmals geschert werden zu können. Für das Scheren langer Stangenabschnitte soll dabei eine wirtschaftliche Lösung angegeben werden, die es gestattet die Stangenreste in die Erwärmungseinrichtung zurückzufahren. Die genannten Nachteile bekannter Schereinrichtungen sollen vermieden werden.

Erfindungsgemäß wird diese Aufgabe bei einer Einrichtung nach dem Oberbegriff dadurch gelöst, daß eine Klemmvorrichtung eine gegen den Anschlag gefahrene Stange in dieser Scherposition festhält und daß die zweite Transportvorrichtung, die vor dem Abtastbereich des Sensors angeordnet ist, in umgekehrter Drehrichtung auf die Stangen einwirkt und bei Vorliegen einer im Bereich zwischen der Klemmvorrichtung und der zweiten Transportvorrichtung liegenden Stoßstelle zwischen zwei Stangen die nicht festgeklemmte Stange in die Erwärmungseinrichtung zurückbewegt und eine Lücke zwischen den aneinanderstoßenden Stangen entsteht und der Sensor dies wahrnimmt.

Diese Lösung erfordert im Vergleich zu bekannten Einrichtungen nur wenig Mechanik, und ist daher unempfindlich gegenüber Verschleiß. Sie vermeidet eine Berührung oder Beschädigung der Stangen und ermöglicht einen zuverlässigen Betrieb unter Einhaltung geringer Toleranzen. Sie ist besonders geeignet für einen Betrieb mit großen Taktzeiten, bei denen die Stangen ohne Zurückstoßen in den Erwärmungsbereich zu stark abkühlen würden.

Als Sensor können vorzugsweise eine Lichtschranke mit Lichtquelle (z. B. auch Laser) und Fotoempfänger, eine Infrarotlichtschranke, ein Reflektions-Lichttaster oder eine pneumatische Einrichtung vorgesehen sein. Als Reflektions-Lichttaster ist beispielsweise ein Sensorsystem verwendbar, welches von einer Sendediode ausgehende Infrarotimpulse durch eine Linse auf den Abtastbereich fokussiert und durch einen Lichtempfänger die durch eine Stange reflektierte Strahlung aufnimmt. Befindet sich kein Stangenteilabschnitt im Abstastbereich, so wird auch keine reflektierte Strahlung durch den Lichtempfänger registriert. Als pneumatische Einrichtung kann eine Gasdüse vorgesehen sein, die im Abtastbereich auf die Stange gerichtet ist. Die Gasausströmmenge bzw. der Gasdruck in der Düse zeigen an, ob sich ein Stangenteilabschnitt im Abtastbereich befindet.

In vorteilhafter Weise kann die Steuereinrichtung derart ausgebildet sein, daß sie die Schaltzeit des Sensors in Verbindung mit der Rückfahrgeschwindigkeit der Stangen auswertet und die Länge der Reststange ermittelt. Bei Verwendung eines Zeitgliedes in der Steuereinrichtung kann diese zwischen kurzen und langen Reststücken unterscheiden. Dies ist vorteilhaft, da es zweckmäßig sein kann, längere Reststücke, obwohl sie nicht mehr scherbar sind, in die Erwärmungsanlage zurückzustoßen, und kurze Reststücke auf jeden Fall auszusondern. Die Steuereinrichtung mit Zeitglied kann eine entsprechende Manipulation der Reststücke bewirken.

Die Steuereinrichtung gibt bei Vorliegen eines Restendes ein Steuersignal an den Manipulator (Vorrichtung zum Abführen der abgescherten Stangen) zur Aussonderung des Restendes aus der Transportvorrichtung ab. Ferner beeinflußt die Steuereinrichtung die Rückstoßvorrichtung in der Weise, daß bei Vorliegen einer nochmals scherbaren Reststange diese in die Erwärmungseinrichtung zurückgestoßen wird. Die Steuereinrichtung kann darüberhinaus auch auf die Stangen-Transportvorrichtung derart einwirken, daß diese einen Rücktransport des Stangenrestes in die Erwärmungsanlage vornimmt.

Eine vorteilhafte Ausgestaltung der Erfindung sieht vor, daß der Anschlag in Stangenlängsrichtung verstellbar ist, und daß eine Vorrichtung vorgesehen ist, die mit der Verstellung des Anschlages eine Längsverschiebung des Abtastbereiches des Sensors koppelt, in der Art, daß der Anschlag und der Abtastbereich um den gleichen Betrag, jedoch in entgegengesetzter Richtung verschoben werden. Die Kopplung der Anschlagstellung mit der Sensorposition kann beispielsweise durch mechanische oder elektromotorische Mittel erfolgen.

Anhand der Zeichnung, in der mehrere Ausführungsbeispiele der Erfindung gezeigt sind, sollen die Erfindung sowie weitere vorteilhafte Ausgestaltungen und Weiterbildungen näher beschrieben und erläutert werden.

Es zeigen :

Fig. 1 eine schematische Darstellung einer Induktionserwärmungsanlage mit erfindungsgemäßer Warmschereinrichtung für Schmiederohlinge,

Fig. 2 und 3 je eine erfindungsgemäße Abschereinrichtung in Seitenansicht bzw. Draufsicht und teilweise geschnitten und

Fig. 4 ein Funktionsbild einer Lageverstelleinrichtung für den Abtastsensor.

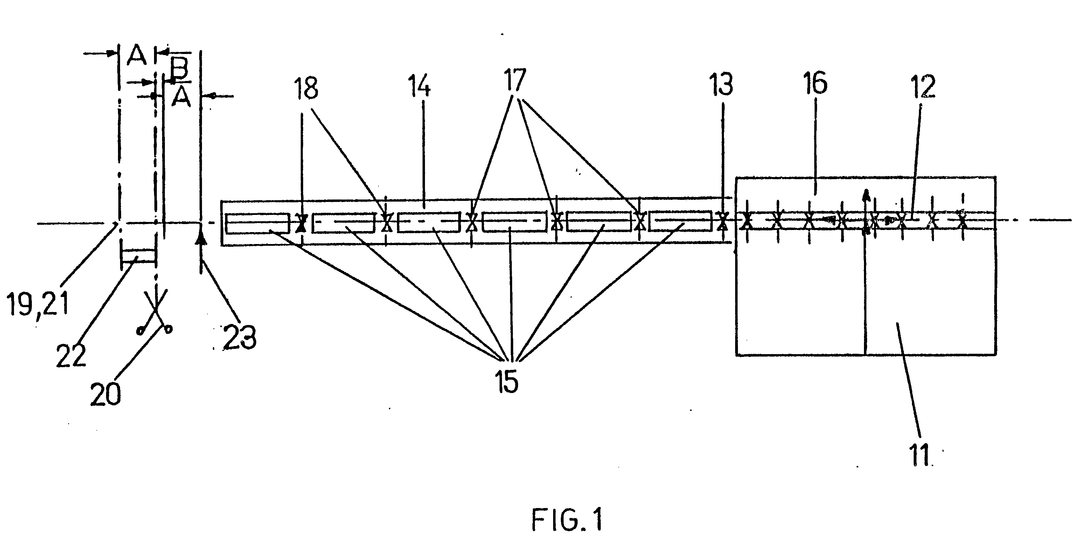

Die in Fig. 1 nicht dargestellten Stangen werden aus einem Magazin 11 entnommen und in den Einlaufrollgang 12 eingelegt. Sie werden durch einen Treibapparat 13 mit Kontivorschub erfaßt und mit gleichmäßiger Geschwindigkeit durch eine Erwärmungseinrichtung 14 transportiert. Die Erwärmungseinrichtung 14 enthält mehrere Induktionsspulen 15 mit gegebenenfalls individueller elektrischer Energieversorgung und Leistungregelung, durch die ein optimaler Erwärmungsverlauf erzielt werden kann.

Vor dem Einschieben der Stangen in den Treibapparat 13 wird die Geradheit der Stangen kontrolliert. Zu stark gekrümmte Stangen werden automatisch aussortiert und in einem Ausschußmagazin 16 abgelegt. Die Stangen laufen normalerweise aneinanderliegend, d. h. ohne Zwischenraum, über die Förderrollen 17 durch die Erwärmungseinrichtung 14. Im Anschluß an die Förderrollen 17 erreichen die Stangen Treibapparate (Transportvorrichtungen) 18, die zum Vor- und Rücktransport der Stangen mit Eilgang und Überlastkupplung ausgerüstet sind.

Wenn eine Stange das Ende der Erwärmungseinrichtung 14 erreicht hat, wird sie durch die Treibapparate 18 mit erhöhtem Vorschub gegen einen Anschlag 19 gefahren und durch einen Niederhalter festgehalten. Die Treibapparate 18 werden nun in umgekehrter Drehrichtung angetrieben und üben auf die in ihrem Einflußbereich liegende Stange eine Zugkraft zum Rücktransport in die Erwärmungseinrichtung 14 aus. Der Rücktransport der Stange ist nicht möglich, wenn die im Einflußbereich der Treibapparate 18 liegende Stange so lang ist, daß sie selbst bis zum Anschlag 19 reicht. In diesem Fall werden die Überlastkupplungen der Treibapparate 18 wirksam.

Stoßen jedoch im Bereich zwischen Anschlag 19 und Treibapparat 18 zwei Stangen aneinander, so wird die zweite Stange durch die Treibapparate 18 in die Erwärmungseinrichtung 14 zurückgefahren, während die erste am Anschlag 19 anliegende Stange durch den Niederhalter festgehalten wird. Dadurch entsteht zwischen den Stangen eine Lücke, die bei Vorliegen eines Restendes durch einen Sensor erkannt wird.

Nach dem Scheren wird der Stangenrest durch einen Rückstoßer 21, der auf die Anschlagachse einschwenkbar ist, in die Erwärmungseinrichtung 14 zurückgestoßen, damit er nicht abkühlt. Der abgescherte Stangenabschnitt 22 wird durch einen Manipulator einer nicht dargestellten Schmiedeeinrichtung zugeführt.

Im Abstand der zweifachen Abschnittlänge A zuzüglich einer minimalen zum Abscheren der Stangen erforderlichen Restlänge B vor dem Anschlag 19 ist ein durch einen Pfeil 23 angedeuteter Sensor zur Abtastung der Stangen angeordnet. Der Sensor ist in der Lage festzustellen, ob sich ein Stangenteilabschnitt in seinem Abtastbereich befindet. Dem Sensor ist eine in Fig. 1 nicht dargestellte Steuereinrichtung nachgeschaltet, die in Abhängigkeit vom Vorhandensein oder Fehlen eines Stangenteilabschnittes im Abtastbereich des Sensors Steuersignale für die Weiterbehandlung der Reststange abgibt.

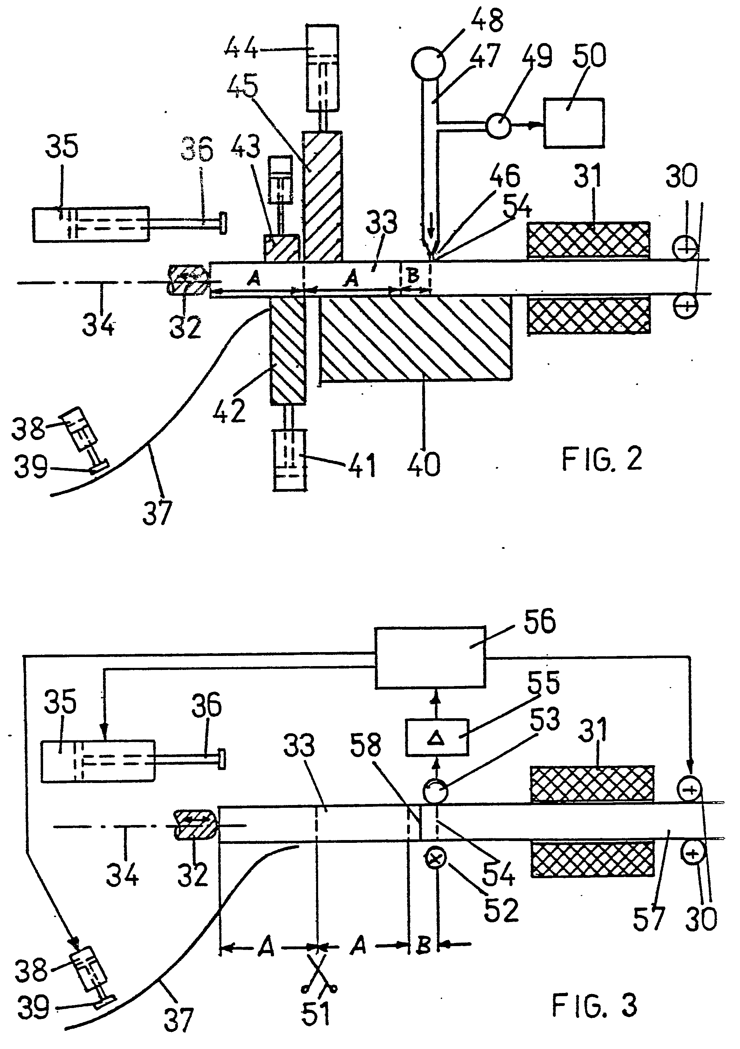

In den Figuren 2 und 3 ist lediglich der Bereich der Schereinrichtung dargestellt, wobei die Figur 2 eine Seitenansicht und die Figur 3 eine Draufsicht auf die Schereinrichtung zeigen. In Fig. 3 wurden die Schermesser jedoch lediglich symbolisch angedeutet. Ferner unterscheiden sich Figur 2 und 3 durch die Wahl des Sensors. Figur 2 zeigt als Sensor eine pneumatische Einrichtung während in Figur 3 der Sensor als Lichtschranke ausgebildet ist.

Sowohl der Figur 2 als auch der Figur 3 ist ein Treibapparat 30, eine Spule 31, eine gegen einen Längenanschlag 32 gefahrene Stange 33, ein auf die Anschlagachse 34 einschwenkbarer und durch einen hydraulischen Zylinder 35 betätigbarer Rückstoßer 36, eine Ausschußrutsche 37 (über die zu kurze, zu heiße und zu kalte Stangenteile entnommen werden) sowie ein durch einen hydraulischen Zylinder 38 betätigbarer Weichensteller 39 entnehmbar. Der Zylinder ist um 90° gedreht dargestellt.

Die Figur 2 zeigt darüberhinaus einen Auflagetisch 40, auf dem die Stange 33 gleitet, ein durch einen hydraulischen Zylinder 41 betätigbares Untermesser 42, einen durch einen hydraulischen Zylinder betätigbaren Niederhalter 43 und ein durch einen hydraulischen Zylinder 44 betätigbares Obermesser 45. Im Abstand (ab Anschlag 32 gerechnet) der zweifachen Abschnittlänge A zuzüglich der minimalen, zum Scheren der Stangen erforderlichen Restlänge B (Einspannlänge) ist eine Düse 46 auf die Stange 33 gerichtet. Die Düse 46 stellt das Ende eines unter Gasdruck stehenden Rohres 47 dar. Der Druck in dem Rohr 47 wird durch einen Druckerzeuger 48 aufgebaut. Ein Druckmesser 49, dessen Signal durch eine Steuereinrichtung 50 ausgewertet wird, mißt den Gasdruck im Rohr 47. Befindet sich vor der Düse 46 der Teilabschnitt einer Stange 33, so ist der Druck im Rohr 47 höher als bei Fehlen einer Stange 33 im Abtastbereich 54. Auf diese Weise stellt die Steuereinrichtung 50 fest, ob sich im Bereich der Düse 46 eine Stange 33 befindet oder nicht.

In Figur 3 ist die Schere 51 lediglich symbolisch dargestellt. Im Abstand der zweifachen Abschnittlänge A zuzüglich der minimalen zum Abscheren der Stangen erforderlichen Restlänge B ist vor dem Anschlag B eine aus einer Lichtquelle 52 und einem Strahlungsempfänger 53 bestehende Lichtschranke angeordnet. Befindet sich im Abtastbereich 54 der Lichtschranke der Teilabschnitt einer Stange, so wird das Lichtbündel zwischen Strahlungsquelle 52 und Strahlungsempfänger 53 unterbrochen. Das Signal des Strahlungsempfängers 53 wird durch einen Verstärker 55 verstärkt und an eine Steuereinrichtung 56 weitergeleitet. Die Steuereinrichtung 56 gibt je nachdem, ob sich vor der Scherebene 51 zum Zeitpunkt des Abscherens der Stange 33 eine scherbare Reststange befindet oder nicht, Steuersignale an den Zylinder 35 des Rückstoßers 36 (sowie, was nicht dargestellt wurde, an die Schwenkeinrichtung des Rückstoßers 36 zum Einschwenken in die Anschlagachse 34) und den Zylinder 38 des Weichenstellers 39 Steuersignale ab.

In dem Ausführungsbeispiel gemäß Fig. 3 liegen in der Transportbahn der Stangen eine erste Stange 33 sowie eine sich unmittelbar an die erste Stange 33 anschließende zweite Stange 57. Die beiden Stangen 33, 57 berühren sich an der Stelle 58. Wie ersichtlich, kann aus der ersten Stange 33 nur noch ein Stangenabschnitt (Stangenabschnittlänge A) gewonnen werden. Das Reststück ist, obwohl es noch länger als eine Stangenabschnittlänge A ist, zu kurz, um nochmals geschert zu werden, da der nach Abzug einer Stangenabschnittlänge A verbleibende Rest die erforderliche Einspannlänge B unterschreitet und daher ein sicheres Einspannen des Restendes nicht mehr möglich ist.

Die Kriterien, anhand derer die Steuereinrichtung 50, 56 Restenden erkennt und Steuersignale für die Weiterbehandlung der Reststangen abgibt, sollen im folgenden anhand eines Funktionsablaufes erläutert werden :

Eine Stange 33 wird durch die Treibapparate 30 gegen den Anschlag 32 gefahren und durch den Niederhalter 43 der Schere festgehalten. Danach reversieren die Treibapparate und ziehen eine Lücke zwischen der ersten am Anschlag 32 anliegenden Stange 33 und einer zweiten Stange, die im Einflußbereich der Treibapparate 30 liegt. Registriert der Sensor 46, 52, 53 diese Lücke, so bedeutet dies, daß die am Anschlag anliegende Stange kürzer ist als die doppelte Stangenabschnittlänge A (Blocklänge) zuzüglich einer minimalen Reststücklänge B (Einspannlänge).

Gleichzeitig mit dem Zurückfahren der zweiten Stange 57 wird ein Stangenabschnitt der Länge A durch die Schere 42, 45, 51 von der am Anschlag 32 anliegenden Stange abgeschnitten und durch einen nicht dargestellten Manipulator aus dem Bereich der Schere zur Umformmaschine (z. B. Schmiedepresse) transportiert. Dann schwenkt der Rückstoßer 36 in die Anschlagachse 34 ein und stößt die Reststange wieder in die Erwärmungseinrichtung 14 zurück.

Ist die Stange 33 soweit abgelängt, daß der Sensor 46, 52, 53 eine Lücke beim Zurückfahren der zweiten Stange 57 registriert (Freigabesignal), so bedeutet dies, daß nach dem Abschneiden der Stange 33 der Stangenrest ein Reststück ist, welches nicht nochmals scherbar ist, da es keine ausreichende Länge zum Festhalten durch den Niederhalter 43 aufweist.

In der Steuereinheit 50, 56 ist ein Zeitglied integriert, welches die Zeit zwischen Beginn des Rückfahrens und Freigabesignal des Sensors 46, 52, 53 mißt. Bleibt diese Zeit unter einem experimentell bzw. theoretisch festlegbaren Wert, so handelt es sich bei dem Restende un ein « längeres » Restende. Überschreitet die Zeit jedoch einen vorgegebenen Wert, so handelt es sich um ein « kurzes » Restende.

Handelt es sich um ein « längeres » Restende, so gibt die Steuereinrichtung 50, 56 ein Steuersignal an den Rückstoßer 36 ab, der das Restende in die Erwärmungseinrichtung 14 zurückschiebt. Erst beim darauf folgenden Takt wird das Restende aussortiert und gleitet die Ausschußrutsche 37 herunter. Liegt jedoch ein « kurzes » Restende vor, so gibt die Steuereinrichtung 50, 56 ein Steuersignal zur sofortigen Aussonderung des Restendes an eine nicht dargestellte Einrichtung ab.

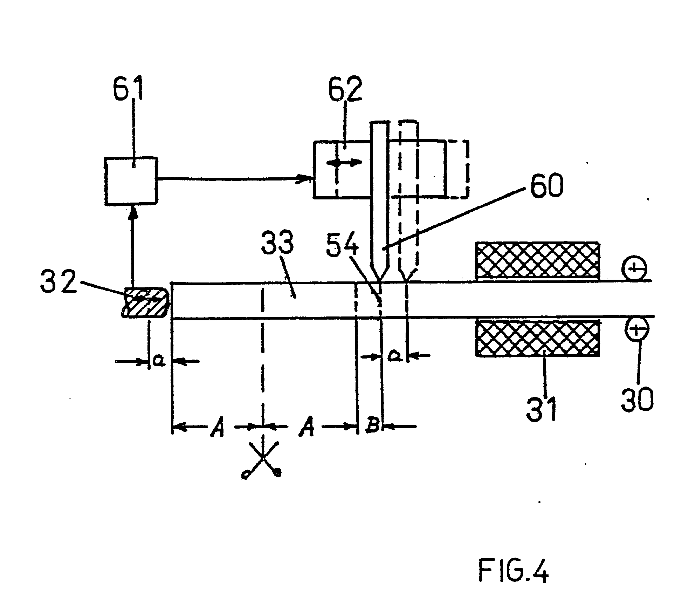

Der Figur 4 ist eine Vorrichtung entnehmbar, durch die die Lage eines Sensors 60 längs der Transportbahn der Stangen mit der Lage des Längenanschlages 32 derart gekoppelt ist, daß der Längenanschlag 32 und der Abtastbereich 54 des Sensors 60 um den gleichen Betrag, jedoch in entgegengesetzter Richtung in Stangenlängsrichtung verschoben werden können. Hierfür wird die Lage des Längenanschlages 32 durch einen Positionsnehmer 61 ermittelt. Der Positionsnehmer 61 gibt ein entsprechendes Steuersignal an einen längs der Transportbahn der Stangen verschiebbaren Schlitten 62, auf dem der Sensor 60 montiert ist, ab. Die Steuerung ist derart ausgelegt, daß eine Lageverschiebung des Längenanschlages 32 um den Betrag a nach links eine Lageverschiebung des Sensors um ebenfalls den Betrag a jedoch nach rechts hervorruft.

**Patentansprüche**

1. Einrichtung zum Scheren von erwärmten Stangen (33, 57) aus Metall, wobei die Stangen durch eine erste Transportvorrichtung (13) als Stangensäule aneinanderliegend mit konstantem Vorschub durch eine Erwärmungseinrichtung (14) transportiert und im letzten Abschnitt der Erwärmungseinrichtung vor der Schereinrichtung (42, 45, 51) durch eine zweite Transportvorrichtung (18) mit erhöhtem Vorschub über die Scherkante hinweg gegen einen Anschlag gefahren werden, und wobei ein vor der Scherkante angeordneter Sensor das Auftreten einer Lücke zwischen zwei aufeinanderfolgenden Stangen wahrnimmt und derart auf die Transportbahn der Stangen ausgerichtet ist, daß sein Abtastbereich im Abstand der zweifachen Abschnittlänge (A) zuzüglich einer minimalen zum Abscheren der Stangen erforderlichen Restlänge (B) vor dem Anschlag liegt und daß dem Sensor eine Steuereinrichtung (50, 56) nachgeschaltet ist, die in Abhängigkeit vom Vorhandensein oder Fehlen eines Stangenabschnittes im Abtastbereich des Sensors Steuersignale für die Weiterverarbeitung der Reststange abgibt und eine Rückstoßvorrichtung (35, 36) zum Zurückstoßen von Reststangen nach dem Abscheren in die Erwärmungseinrichtung, dadurch gekennzeichnet, daß eine Klemmvorrichtung (43) eine gegen den Anschlag (32) gefahrene Stange (33) in dieser Scherposition festhält und daß die zweite Transportvorrichtung (18), die vor dem Abtastbereich (54) des Sensors angeordnet ist, in umgekehrter Drehrichtung auf die Stangen einwirkt und bei Vorliegen einer im Bereich zwischen der Klemmvorrichtung (43) und der zweiten Transportvorrichtung (18) liegenden Stoßstelle zwischen zwei Stangen (33 und 57) die nicht festgeklemmte Stange in die Erwärmungseinrichtung zurückbewegt und eine Lücke zwischen den aneinanderstoßenden Stangen (33 und 57) entsteht und der Sensor dies wahrnimmt.

2. Schereinrichtung nach Anspruch 1, wobei als Sensor zur Abtastung der Stangen eine Lichtschranke mit Lichtquelle (52) und lichtelektrischem Empfänger (53) vorgesehen ist, dadurch gekennzeichnet, daß die Lichtschranke eine Infrarotlichtschranke ist.

3. Schereinrichtung nach Anspruch 1, dadurch gekennzeichnet daß als Sensor ein Reflexions-Lichttaster vorgesehen ist.

4. Schereinrichtung nach Anspruch 1, dadurch gekennzeichnet, daß als Sensor eine pneumatische Einrichtung vorgesehen ist.

5. Schereinrichtung nach einem der Ansprüche 1 bis 4, dadurch gekennzeichnet, daß der Längenanschlag (32) in Stangenlängsrichtung verstellbar ist und daß eine Vorrichtung vorgesehen ist, die mit der Verstellung des Längenanschlages (32) eine Längsverschiebung des Abtastbereiches (54) des Sensors koppelt, in der Art, daß der Längenanschlag (32) und der Abtastbereich (54) um den gleichen Betrag (a), jedoch in entgegengesetzter Richtung verschoben werden.

**Claims**

1. Apparatus for the cutting of heated bars (33, 57) of metal, in which arrangement the bars are transported by a first transport device (13) with constant feed adjacent one another as a bar column through a heating device (14) and, in the final section of the heating device before the cutting apparatus (42, 45, 51), are moved by a second transport device (18) with increased feed over the cutting edge and against a stop, and a sensor, arranged ahead of the cutting edge, detects the occurrence of a gap between two successive bars and is aligned with the transport path of the bars so that its sensing region is located at an interval of twice the section length (A) plus a minimum residual length (B) necessary for cutting the bars in front of the stop, and that following the sensor is a control device (50, 56) which delivers control signals for the further treatment of the bar residue as a function of the presence or absence or a bar section in the sensing region of the sensor and a repulsion device (35, 36) to repel back bar residues after cutting into the heating device, characterized in that a clamping device (43) maintains a bar (33) moved against the stop (32) in this cutting position and in that the second transport device (18), which is arranged in front of the sensing region (54) of the sensor, acts on the bars in the opposite direction of rotation and, in the presence of a contact point between two bars (33 and 57) in the

region between the clamping device (43) and the second transport device (18), the unclamped bar moves back into the heating device and a gap is produced between the abutting bars (33 and 57) and the sensor detects this.

2. Cutting apparatus according to Claim 1, in which arrangement a light barrier with light source (52) and photoelectric receiver (53) is provided as the sensor for sensing the bars, characterized in that the light barrier is an infrared light barrier.

3. Cutting apparatus according to Claim 1, characterized in that a reflected light sensor is provided as the sensor.

4. Cutting apparatus according to Claim 1, characterized in that a pneumatic device is provided as the sensor.

5. Cutting apparatus according to any of Claims 1 to 4, characterized in that the length stop (32) is adjustable in the bar longitudinal direction and that a device is provided which couples a longitudinal displacement of the sensing region (54) of the sensor with the adjustment of the length stop (32) so that the length stop (32) and the sensing region (54) are displaced by the same amount (a), but in opposite directions.

**Revendications**

1. Installation pour le cisaillement de barres de métal (33, 57) chauffées dans laquelle les barres sont transportées par un premier dispositif de transport (13), sous forme d'une colonne de barres jointives, avec une avance constante, à travers un dispositif de chauffage (14), puis sont amenées dans la dernière partie du dispositif de chauffage, précédant le dispositif de cisaillement (42, 45, 51), au moyen d'un deuxième dispositif de transport (18) à avance plus rapide, au-delà de l'arête de cisaillement contre une butée, et dans laquelle un détecteur disposé avant l'arête de cisaillement décèle une lacune entre deux barres successives et est aligné sur le chemin de transport de barres de telle sorte que son champ d'exploration se trouve en avant de la butée à une distance double de la longueur d'un tronçon plus une longueur résiduelle minimale nécessaire pour le cisaillement des barres, le détecteur étant relié à un dispositif de commande (50, 56) qui émet, en fonction de la présence ou de l'absence d'un tronçon de barre dans le champ d'exploration du détecteur, des signaux de commande pour la poursuite du traitement de la barre résiduelle, un dispositif de retour (35, 36) étant prévu pour ramener, après cisaillement, les barres résiduelles en arrière dans le dispositif de chauffage, caractérisée en ce qu'un dispositif de serrage (43) maintient une barre (33) amenée contre la butée (32) dans cette position de cisaillement, en ce que le deuxième dispositif de transport (18) qui est disposé avant le champ d'exploration (54) du détecteur agit sur les barres selon un sens de rotation inverse et, en présence d'un joint entre les deux barres se trouvant dans la zone entre le dispositif de serrage (43) et le deuxième dispositif de transport, ramène en arrière dans le dispositif de chauffage la barre non bloquée, de sorte qu'il se produit entre les barres (33 et 57) jointives une lacune qui est décelée par le détecteur.

2. Installation de cisaillement selon la revendication 1, sur laquelle il est prévu comme détecteur pour l'exploration des barres une barrière lumineuse avec une source lumineuse (52) et un récepteur photo-électrique (53), caractérisée en ce que la barrière lumineuse est une barrière à lumière infra-rouge.

3. Installation de cisaillement selon la revendication 1, caractérisée en ce qu'il est prévu comme détecteur un détecteur lumineux à réflexion.

4. Installation de cisaillement selon la revendication 1, caractérisée en ce qu'il est prévu comme détecteur un dispositif pneumatique.

5. Installation de cisaillement selon une quelconque des revendications 1 à 4, caractérisée en ce que la butée de longueur (32) est réglable dans le sens longitudinal des barres et en ce qu'il est prévu un dispositif qui, lors du déplacement de la butée de longueur (32), provoque un déplacement longitudinal du champ d'exploration (54) du détecteur de telle manière que la butée de longueur (32) et le champ d'exploration (54) soient déplacés d'une même valeur (a), mais en sens opposés.

FIG.1

FIG. 2

FIG. 3

2

FIG.4